# EUROPEAN PATENT SPECIFICATION

(11) **EP 2 882 692 B1**
(45) Date of publication and mention of the grant of the patent: **19.09.2018**
(21) Application number: 13827956.7
(22) Date of filing: 08.08.2013
(51) Int. Cl.: C02F 3/34, C02F 1/44, C02F 3/00, C02F 3/10, C02F 3/12, C02F 3/30, C25B 9/08, C02F 101/16, C02F 103/20

(54) **BIOLOGICAL TREATMENT SYSTEMS UTILIZING SELECTIVELY PERMEABLE BARRIERS**
BIOLOGISCHE BEHANDLUNGSSYSTEME MITTELS SELEKTIV DURCHLÄSSIGER BARRIEREN
SYSTÈMES DE TRAITEMENT BIOLOGIQUE EMPLOYANT DES BARRIÈRES À PERMÉABILITÉ SÉLECTIVE

(30) Priority: 08.08.2012 US 201261680827 P
(43) Date of publication of application: 17.06.2015
(73) Proprietor: Cambrian Innovation, Inc., Boston, MA 02210 (US)
(72) Inventor: SILVER, Matthew, Cambridge, MA 02139 (US); BUCK, Justin, Cambridge, MA 02139 (US); HUANG, Zhen, Newton, MA 02458 (US); KIELY, Patrick, Montague PEI (CA); GUERDAT, Todd, Amherst, NH 03031 (US)
(74) Representative: HGF Limited
(86) International application number: PCT/US2013/054163
(87) International publication number: WO 2014/026015

(56) References cited:
- WO-A1-2013/009797
- WO-A2-2012/012647
- WO-A2-2012/054629
- US-A1- 2003 057 162
- US-A1- 2003 209 489
- US-A1- 2004 149 634
- US-A1- 2004 159 608
- US-A1- 2006 207 925
- US-A1- 2009 250 394
- VIRDIS B ET AL: "Microbial fuel cells for simultaneous carbon and nitrogen removal", WATER RESEARCH, ELSEVIER, AMSTERDAM, NL, vol. 42, no. 12, 1 June 2008 (2008-06-01), pages 3013-3024, XP022709897, ISSN: 0043-1354, DOI: 10.1016/J.WATRES.2008.03.017 [retrieved on 2008-04-08]

## Description

### FIELD OF INVENTION

The invention relates to methods for removing contaminants from media, such as water, by employing microorganisms that can metabolize the contaminants. In particular, the microorganisms are cultured in reactors having semi-permeable barriers that regulate the flow of the contaminants from the media to the microorganisms.

### BACKGROUND

The removal of nitrogen in its various forms (e.g., nitrites, nitrates, ammoniums, ammonia) is an increasingly important objective in wastewater treatment. When released into the environment nitrogen causes algal blooms in oceans, pollutes lakes and rivers, and pollutes drinking wells and reservoirs.

Nitrogen removal has been particularly difficult to address at smaller point sources where it is not feasible to construct a treatment facility that achieves the economies of scale enjoyed by municipal water treatment works. Such point facilities include anaerobic digestion facilities. agricultural process water, and fish farming (aquaculture).

For example, re-circulating aquaculture systems (RAS), also known as closed-loop systems, offer a possibility for large scale, sustainable, fish production. However, economical and efficient wastewater treatment is a critical bottleneck to the sustainable growth of the RAS and semi-RAS industry. In particular, RAS, and other such closed-loop systems, produce high concentrations of dissolved nitrogenous waste components and reduced organic compounds, which in turn stress the chemical oxygen demand (COD) and biological oxygen demand (BOD) in the system. If the wastes are not removed, the stock will die off. Furthermore, nitrogenous waste and reduced organic compounds can adversely affect the local habitat beyond the RAS.

Existing denitrification techniques are not adequate to meet the needs of sustainable aquaculture. Nitrates can be removed via water exchange, but this must often be equivalent to 10 - 20% of the system volume per day, a huge amount of water. Furthermore, as regulations become stricter, the release of nitrates at end of pipe (EOP) will likely be treated with increasing stringency requiring even greater amounts of water to be used in exchange systems. As an alternative to exchange, nitrates can be removed via anaerobic denitrification, using heterotrophic bacteria such as *Pseudomonas*. However, the low carbon to nitrogen (C/N) ratio in aquaculture effluent requires additional carbon, e.g., methanol, to make anaerobic denitrification effective. To counteract the cost and risks of using methanol, organic matter (e.g. sludge) from the same facility can be used in up-flow anaerobic sludge blanket reactors (UASB) to achieve the needed carbon content. However, this sludge is often in particulate form, making it difficult to keep mixed with the bacteria. As such, hydrolysis and fermentation must be applied to convert the sludge into volatile fatty acids and other molecules more easily consumed by denitrifying organisms, adding complexity and cost to the operation. More importantly, mixing culture tank water with pathogenic sludge requires costly pre- and post-treatment sterilization and raises a serious risk of bio-contamination in the facility. In addition, aquaculture producers have experienced significant off-flavors in their product when using sludge as a COD source for denitrification.

In addition to removing nitrogen from the RAS system to keep the stock healthy, it is also important to clean process waters before they are discharged into the environment. This post-use treatment, known as End-of-Pipe (EOP) treatment, is another particularly important kind of treatment common to RAS and semi-RAS. In aquaculture, most EOP flows are discharges from primary treatment technologies, such drum filters, belt filters, bio-filters, or settling tanks. It is not uncommon for drum-filter discharge, for example, to show high levels of COD (1000 mg/L), Nitrate (100 mg/L) and total suspended solids (2000 mg/L). While the composition of this stream varies with fish species and facility-type, the EPA-regulated output requirements are the same at most farms.

Several technologies have been suggested to address EOP clean-up in aquaculture, but each has its limitations. EOP treatment is particularly important for the future of the aquaculture industry because current advances in treatment systems continue to create concentrated streams that must be dealt with economically. One technology touted to treat EOP flows is aeration.
However, aeration is often uneconomical at the scale of fish-farming, and it is exceedingly energy intensive. It also does not address the accompanying solids waste stream which must also be managed. Other technologies use ion-exchange membranes or ion-polymer precipitates to clean up EOP flows. However, these technologies become prohibitively expensive on a larger scale and still present solid waste disposal issues,

To date, the control of dissolved oxygen and removal of toxic ammonia (a form of denitrification) have been the main objectives of RAS wastewater treatment systems. But as the industry matures, it is becoming increasingly evident that end-of-pipe biological oxygen demand (BOD) and elevated nitrate levels in the culture water will become new roadblocks to increased water re-use and higher fish yields. Thus, there is a great need for improved technologies that can economically remove nitrates and chemical oxygen demand (COD) from wastewater streams, and manage pH.

WO2013009797 discloses a bioelectrochemical system that includes an anode, a saline solution chamber and a cathode. The anode is at least partially positioned within an anode chamber containing an aqueous reaction mixture including one or more organic compounds and one or more bacteria for oxidizing the organic compounds. The saline solution chamber contains a draw solution and is separated from the anode chamber by a forward osmosis membrane. Water diffuses across the forward osmosis membrane from the aqueous reaction mixture to the draw solution.

WO2012054629 discloses a bio-electrochemical system having various configurations for the treatment of water, wastewater, gases and other biodegradable matter. The bio-electrochemical systems may be configured for treating wastewater while generating multiple outputs. The bio-electrochemical systems may be configured for improving the efficiency of electrodialysis removal systems. The bio-electrochemical systems may be configured for use in banks and basins.

US2009250394 discloses a membrane, optionally for use in sewage treatment. The membrane comprises a support membrane having a gas face biolayer on a gas face of the membrane and/or in the support membrane near the gas face, and a liquid face biolayer on a liquid face of the membrane and/or in the support membrane near the liquid face.

WO2012012647 discloses reactor designs, component designs, and operating schemes for removing nitrates and chemical oxygen demand from any suitable wastewater stream. The reactor designs, component designs, and operating schemes are designed to modify and improve pH and water quality in wastewater streams.

### SUMMARY

The invention addresses the needs of industry for robust and inexpensive waste management where there are multiple contaminants that require remediation. In an aspect of the invention a method is provided for the removal of a first targeted contaminant in a first fluid medium and a second targeted contaminant in a second fluid medium in a system, comprising: separating a treatment zone and a medium zone by a semi-permeable barrier; providing the medium zone with the first fluid medium and the treatment zone with the second fluid medium; and disposing a culture of microorganisms within the treatment zone, the culture comprising at least one first microorganism capable of using a first targeted contaminant in a first metabolic process and at least one second microorganism capable of using a second targeted contaminant in a second metabolic process, wherein the semi-permeable barrier is impermeable to the second targeted contaminant, is permeable to the first targeted contaminant but is impermeable to the first and second microorganisms or impairs the passage of the first and second microorganisms. Also disclosed is a system for removing contaminants from a medium, for example, an aqueous medium. Typically, the system comprising at least two zones: (1) A first zone containing microorganisms that metabolize the contaminants, either directly or indirectly (the "treatment zone", and (2) A second zone into which the medium to be treated is passed (the "medium zone"). The treatment zone and/or the medium zone may include a support structure upon which a biofilm of microorganisms can grow. As discussed below, the systems also have applications outside aquaculture.

Also disclosed is a bio-electrochemical system (BES), i.e. including an anode disposed in the treatment zone and a cathode disposed in the medium zone, along with source of electrical potential that can be used to bias the electrodes. Typically, when the system is a BES, the treatment zone will include electrically active microorganisms (i.e. exo-electrogens). The treatment zone and/or the medium zone may include a support structure upon which a biofilm of microorganisms can grow, In BESs including support structures, the support structures are disposed on the side of each electrode that is opposite the barrier, or the support structure is incorporated into the electrodes.

Additional variations, such as pre-treatment of the medium, and co-processing with other purification/waste management techniques are also disclosed. The invention is defined by the appended set of claims.

### BRIEF DESCRIPTION OF THE DRAWINGS

FIG. 1 is a simplified drawing of a system including a treatment zone and a medium zone separated by a semi-permeable barrier;
FIG. 2 shows the invention that is suitable to be used for denitrifying and clarifying waste with high nitrogen content;
FIG. 3 shows the invention that is suitable to be used for denitrifying and clarifying other waste with high nitrogen content;
FIG. 4 shows a system for removing a targeted contaminant from a medium including support structures that facilitate growth of microorganisms that metabolize the contaminants;
FIG. 5 shows a system for removing a targeted contaminant from a medium. The system is a bioelectrochemical system (BES) and includes support structures that facilitate growth of exo-electrogenic microorganisms that metabolize the contaminants in the presence of an electric potential;
FIG. 6 show a system for removing a targeted contaminant from a medium, including multiple treatment units inside a tank that defines a volume of medium to be decontaminated;
FIG. 7 shows a system for removing a targeted contaminant from a medium, including multiple treatment units inside a tank that defines a volume of medium to be decontaminated. The embodiment in FIG. 7 also includes a BES system that can be used to monitor the progress of the decontamination as well as the health of the microorganism culture;
FIG. 8 shows a system for removing a targeted contaminant from a medium, including inner and outer treatment chambers (1) and (3) surrounding a medium chamber (2);
FIG. 9 shows an embodiment of a treatment zone that comprises a plurality of interconnected semi-permeable barriers with connective piping to allow the microorganisms to circulate between the plurality of semi-permeable barriers;
FIG. 10 depicts a system using a plurality of interconnected semi-permeable barriers with connective piping as the treatment zone, wherein the medium to decontaminated is simply held in the tank surrounding the plurality of interconnected semi-permeable barriers. The plurality of interconnected semi-permeable barriers could be biased at an electrical potential higher than the tank and the treatment zone could include exo-electrogens.

### DETAILED DESCRIPTION

The methods of the invention include a variety of systems that can be used to remove contaminants from a fluidic medium, typically an aqueous medium. The systems contain treatment zones including a semi-permeable barrier constructed to segregate cultures of microorganisms that metabolize the contaminants from the media. With time, the microorganisms consume the contaminants and the medium is cleaned. The system additionally may include electrodes and used exoelectrogenic microorganisms to remove contaminants.

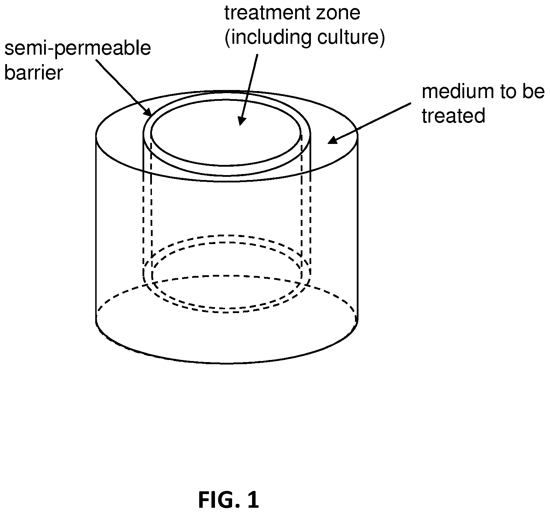

The two zones are contained in an enclosure (i.e., a tank) that is impermeable to the medium being treated. For example, where the medium is aqueous, the enclosure will be watertight. One zone, the "treatment zone" contains the microorganisms that will metabolize the contaminants, either directly or indirectly. The second zone, the "medium zone" includes the medium to be cleaned. However, the treatment need not take place exclusively in the treatment zone, as an appreciable fraction of treatment can occur in the medium zone. For example, two or more separate microorganism cultures may be used with at least one in each zone. As shown in FIG. 1, the system can be as simple as one enclosure separated into two zones by a semi-permeable barrier. The system may be an enclosure into which are disposed multiple smaller enclosures whose boundaries are comprised, at least in part, of the barrier. These configurations allow multiple distinct treatment zones to be associated with a single medium zone, or vice versa. Additionally, devices for inducing and maintaining positive pressure can be used to prevent or mitigate the contamination of the medium in the medium zone in the event of a rupture in the semi-permeable barrier. That is, the positive pressure will cause the contents of the medium zone to flow into the treatment zone rather than a flow into the medium zone, Such a design will avoid contamination of the medium with the microorganisms or other nutrients (e.g., solid waste) that are in the treatment zone.

The invention will be used primarily for the treatment of fluid media, particularly aqueous media. More particularly, the invention is used for denitrification of wastewater. Nonetheless those of skill in the art will recognize that the principles disclosed can be used to construct a system for removing contaminants from a gaseous medium or from a medium comprised of a mixture of solids and liquids, such as a slurry, or a mixture of liquids and gasses, or a mixture of solids, liquids, and gasses.

### Microorganisms

A wide variety of microorganisms, including bacteria, archaea, fungi, protozoa, and algae can be used with the methods of the invention, provided that the microorganisms can be cultured and maintained, and that the microorganisms metabolize (either directly or indirectly) the targeted contaminant(s). The microbial community can be comprised of a single species of microorganism or multiple species. At least one species included in this community will be able to use each targeted substance in its metabolic processes. Where one substance is targeted for removal from the medium, one or more species of microorganisms in the community will be able to utilize that substance. Where multiple substances are targeted for removal, at least one species of microorganism will use each substance. A single species of microorganism can utilize more than one targeted substance in its metabolic processes. In some embodiments, the microorganism may be bacteria from *Geobacter, Clostridia, Rhodeferax or E*. *coli*.

In some examples, the microorganisms will use the targeted substance as a nutrient source or as a direct electron acceptor or electron donor (for example, by an electrically active microorganism). Alternatively, the metabolic processes can generate (or catalyze the generation of) chemicals that react with the targeted substances. Consequently, the microorganism community may include microorganisms that do not directly remove the targeted substance, but facilitate its removal or contribute to the overall health and stability of the microorganism community. For example, if the substance is a compound that is broken down into products, which arc, in turn, substances for which removal is desirable, these complementary organisms can use the remaining products in their metabolic processes, to provide further remediation. Another model is complementary organisms, i.e., that generate (or catalyze the generation of) chemicals that are used by the removing organisms as nutrients or which generally improve or maintain the suitability of the system's environment for the treatment process (e.g., maintaining advantageous pH levels).

In some examples, a microorganism or a mixture of microorganisms will use another waste stream that is present as nutrients. For example, a microorganism may use the liquid and solids fractions of the end-of-pipe (EOP) stream in addition to the targeted contaminant in its metabolic processes. In such instances, the activity and relative abundance of the waste may be tailored to the needs of the microorganisms. For example, solid waste can be micronized and diluted to allow for easier consumption.

### Modes of Operation

The medium to be treated, generally water or wastewater, will enter the medium zone. The medium may be pumped or it may be filled via gravity, etc. The contaminants in the medium will pass through the semi-permeable barrier into the treatment zone, where the microorganisms metabolize the contaminants. A second stream of material is added to the treatment zone, which may contain nutrients for the microorganisms and contains secondary contaminants to be treated. The system will typically also include the capacity to adjust the flow of contaminants or nutrients to assure optimum functioning. The barrier will also prevent the microorganisms and secondary contaminants from passing from the treatment zone to the medium zone or for microbial populations in separate chambers to contaminate each other.

A preferred use of the methods of the invention is for denitrification of water. When the system is used in denitrification, e.g. by including an ion exchange membrane (e.g. an anion exchange membrane or a cation exchange membrane) as a semi-permeable barrier, the nitrate ions will pass from the medium zone to the treatment zone. The barrier additionally assures that microorganisms do not pass into the water, which may be flowed into a river, lake, etc., after cleaning.

In some examples, a source of organic waste, such as water with a high chemical oxygen demand (COD), will be introduced directly into the treatment zone. The organic waste provides a carbon source to be used by the microorganisms as they metabolize the nitrates, while simultaneously reducing the COD of the wastewater. This arrangement is particularly useful for aquaculture water because a second stream of waste-the excretions of the stock-can be treated at the same time. In this embodiment, the waste is removed from the aquaculture (for example, by filtering) and then introduced into the treatment zone to satisfy COD and nutrient demands of the microorganisms. In some examples, the barrier will be designed to additionally prevent the second stream of waste from returning to the medium. This will allow for the treatment of nitrogenous waste and COD while minimizing the risk of contamination of the cleaned aquaculture water. The invention is not limited to denitrification, however, as the systems can be engineered to remove a wide variety of contaminants, given the correct combination of microorganisms and semi-permeable barriers. In particular, the invention is broadly applicable to removing ionic contaminants from water.

Recirculating aquaculture systems are intrinsically designed to limit the amount of biologically available organic carbon in the culture system so as to promote nitrification in the biological filters. As a result, the key process to reducing the amount of organic carbon in the culture system is the mechanical capture and removal of waste solids. The mechanical process thus creates a concentrated waste solids effluent stream (EOP) high in total COD (tCOD), but potentially low in soluble COD (sCOD). An effluent stream that is high in waste solids and low in sCOD implies reduced biological availability of the organic carbon as the bulk of the organic carbon is tied up in the particulate fraction of the effluent stream. To increase the biological availability of the waste solids, the process of anaerobic digestion may be utilized to extract and solubilize volatile fatty acids (VFAs) via hydrolysis, thus increasing the sCOD. The extraction of VFAs then improves the availability of the organic carbon (increases sCOD) and ultimately may be used to enable denitrification.

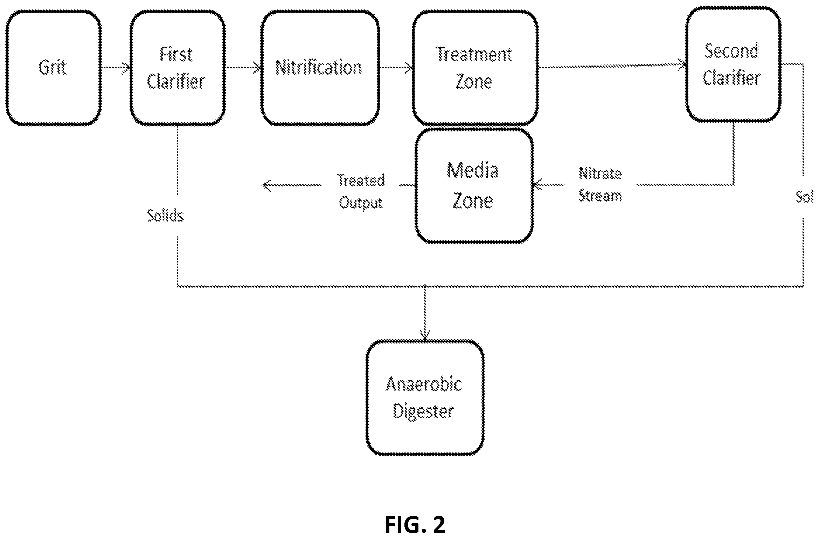

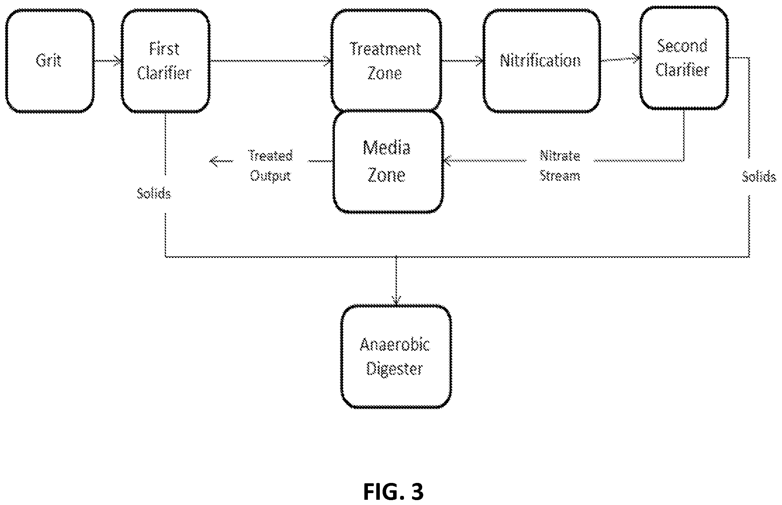

The same principles of the invention may also be incorporated into an anaerobic digestion (AD) system separate from aquaculture. For example, it may be integrated into an AD system for use in municipal wastewater or into an AD system for reducing animal wastes, e.g., from a dairy farm. As shown schematically in FIG. 2, the wastewater will be treated by (1) a grit filter, (2) then into a first clarifier, (3) then a treatment zone (4) then into a nitrification unit, (5) then into a second clarifier, (6) then the solids will flow into the anaerobic digester, while a second stream will flow into the medium zone for further denitrification. Alternatively, the treatment zone step can come after the nitrification step, as shown in FIG 3.

### Barriers

The barrier functions to contain the microorganisms in order to prevent their uncontrolled spread into the medium that is being treated. Additionally, the barriers prevent cross-contamination when distinct microbial populations are used in the different zones of the system. This barrier can be mechanical, such as a filter with a pore size large enough to allow targeted substance to enter and leave the system but small enough to prevent the organisms to pass through. The barrier can also use electrochemical principles, such as an ion-permeable membranes that allows the passage of ions but excludes the microorganisms. The barrier could also utilize sterilization or biocidal characteristics, such as an ultraviolet light barrier.

The semi-permeable barrier may be any suitable semi-permeable barrier designed to allow passage of the contaminant, while inhibiting the passage of the microorganisms. For example, the semi-permeable barrier may comprise a polymer matrix, a composite matrix, fabric, thin films, ceramics, or a fabricated nanoporous structure. Barriers may be configured as tubes, parallel sheets, spirals, interleafed structures, or other suitable configuration to maximize the surface area available for exchange. The barriers may be reinforced with structural elements to provide structural rigidity and/or to withstand applied pressure. Many types of semi-permeable barriers are commercially available from manufacturers such as Applied Membranes, Inc. (Vista, CA).

### Support Structures

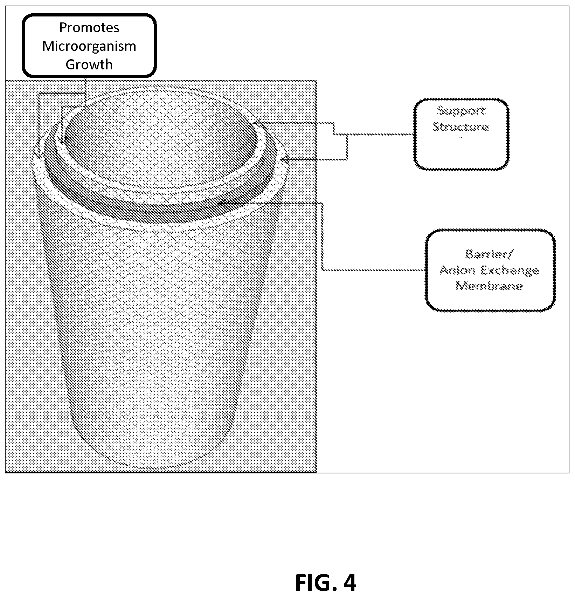

In some examples, the systems include a support structure to encourage the growth of biofilms of the microorganisms, and/or to assist mixing in the zones, and/or to assist diffusion between zones. The support structures can be any shape or material that provides a structure on which biofilms may grow and which allows the passage of nutrients (including targeted contaminants) into and through the structure. For example a mesh, cross-flow media or granules could be used. In a mesh configuration, the support structures will generally be disposed near the barrier, preferable with no space between the barrier and the support structure, as shown in FIG. 4. In other embodiments, the support structures will be free-floating (or neutral density), large-surface-area polymeric structures that allow the biofilms to be distributed throughout the treatment zone. Additionally, if the system incorporates BES components (described below), the support structures will be disposed near the electrodes, preferably with no space between them, or alternatively incorporated into the support structures.

### Bioelectrochemical Systems

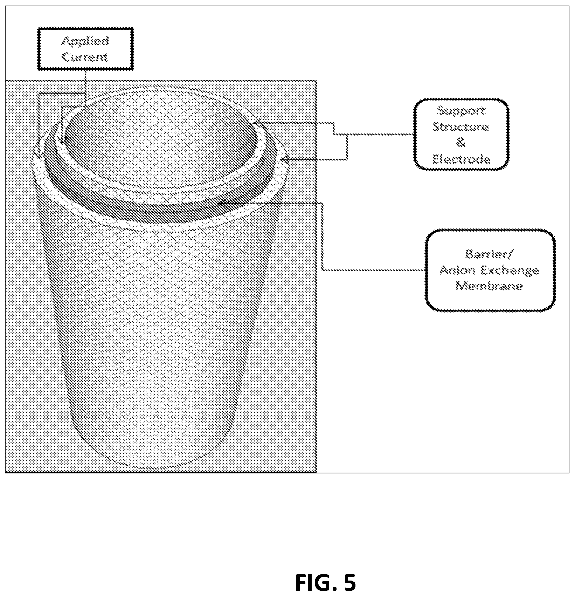

In addition to the combination of treatment zones and semi-permeable barriers, some systems additionally incorporate bioelectrochemical systems (BES), i.e., including an electrical potential and/or a source of electric current as well as microorganisms that use electrical energy or create electrical energy in their metabolic processes (exo-electrogens). See FIG. 5. BESs offer several significant enhancements of the denitrification process. Firstly, BES offers the potential to enable denitrification in the cathode compartment (treatment zone) when COD availability is very low. Additionally bioelectrodes, biologically-active anode and cathode electrodes, can be used to encourage biofilms of exo-electrogens.

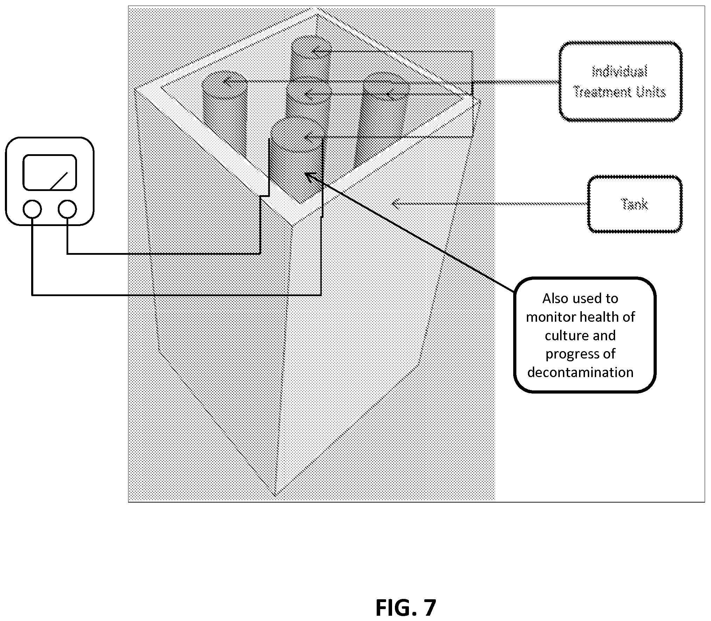

In an embodiment of a BES of the methods of invention, current generated at the bioanode by the COD consuming microorganisms is transferred to the biocathode. The stream of electrons enables the denitrification process at the biocathod when traditional denitrification would not occur due to the organic carbon limitation in the culture system water. Secondly, the current generated by the BES provides an intrinsic feedback mechanism by which information relating to the water quality in the anode or cathode compartments may be inferred. See FIG. 7.
Feedback in the electrical circuit is based on either/both the BOD and nitrate availability, depending on how the system is designed and operated. This information can also be used for control and automation, i.e., by coupling the addition of nitrates and/or BOD to the current readings. In some embodiments, a system includes one or more treatment zones that are not BESs and one or more treatment zones that are BESs.

When the system includes one or more BESs, the BESs can be monitored to determine the progress of the decontamination process and to gain insight regarding the health or function of the microorganisms. That is, changes in the electrical potential between electrodes or the amount of current produced/consumed between the electrodes are indicative of the biological activity of the system, including consumption of BOD and/or nitrogen. For example, an increase in the use of the cathode as an electron acceptor by the microbes could indicate a reduced level of nitrate while a decrease could indicate a reduced level of BOD. It should be noted that this principle can apply to the use of this invention in the treatment of substances other than BOD or nitrate, as the electrical activity depends on the use of the electrode as an electrode acceptor or donator.

Depending upon need, a BES can be arranged in several configurations depending upon the presence of an external electrical energy sink, or source, or bias potential. Accordingly, the BES system can take the form of a microbial fuel cell (MFC), a microbial electrolysis cell (MEC), or system with a poised cathode potential, e.g., poised at the reduction potential of nitrate. As a brief description of the difference between the MFC and MEC operating scenarios, MFC implies a self-regulated voltage potential between the anode and cathode determined by the microorganisms on the bioelectrodes while and MEC implies a current is applied to the electrodes and the potential between the electrodes is fixed. Poising the cathode potential is possible using a potentiostat and a reference electrode. Typically only the cathode is poised and the anode potential is allowed to "free float." In some embodiments, this arrangement facilitates monitoring the progress of decontamination of the medium because when denitrification ceases, the potential becomes unbalanced, which can be used as a signal to take corrective action. For example, the signal may prompt the addition of inputs, i.e., adding COD or nitrates.

### Pretreatment and Complimentary Microorganisms

In other embodiments, the invention may also include a pretreatment step. For example, where the invention is used for denitrification, a nitrification step may be included. Additionally oxygen removal may be included in the system as a pre-treatment. This arrangement can allow ammonia and ammonium ions produced in the anaerobic digestion of solids to also be disposed of more readily.

The zones can comprise complementary populations of microorganisms, each capable of metabolizing complementary products. For example the product of one microorganism's metabolism of one targeted contaminant can cross the semi-permeable barrier (ion exchange or otherwise), where the product is consumed as input to the metabolic process of a different microorganism in the other zone, whether as an energy source or a terminal electron acceptor. For example, a filter (such as a biofilter) from the anaerobic digester can direct trapped ammonia into a medium to be processed, while a portion of the solids from the digester can be added to the treatment zone to fuel the microorganisms, as discussed above.

In an embodiment a nitrifying biofilter (e.g., moving bed bioreactor - MBBR) housed in a container lined with an ion exchange membrane (e.g., an anion exchange membrane) could be set inside a digestion chamber or compartment like a septic tank or settling basin. A liquid fraction, e.g., from the digestion compartment, can be pumped into the aerobic MBBR to convert the ammonia produced in the digestion process to nitrate. The nitrate would then diffuse into the digestion compartment thru the barrier for final denitrification along with the process water. The water in the MBBR, in turn, would then serve as a polished EOP discharge, and could be further refined using a second membrane filter to capture any remaining biomass which might come from the nitrification biofilter.

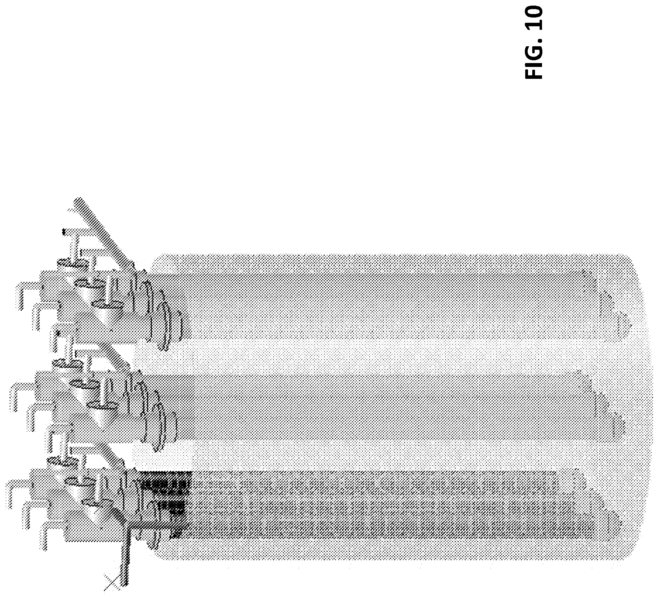

Alternatively, the process could be reversed, to some extent, whereby the digestion compartment is effectively used as a "pretreatment tank," and a pump system recirculates the supernatant through a series of tubes made up of ion exchange barriers and back to the digestion compartment. The tubes would then be immersed in a bath of water from a separate stream high in nitrate thereby enabling transport of nitrate into the tubes and finally to the digestion compartment for final denitrification. See, e.g., FIG. 10. Like the example discussed above, the bath of water high in nitrate could again be a MBBR aerobic nitrification biofilter or similar structure.

### EXAMPLES

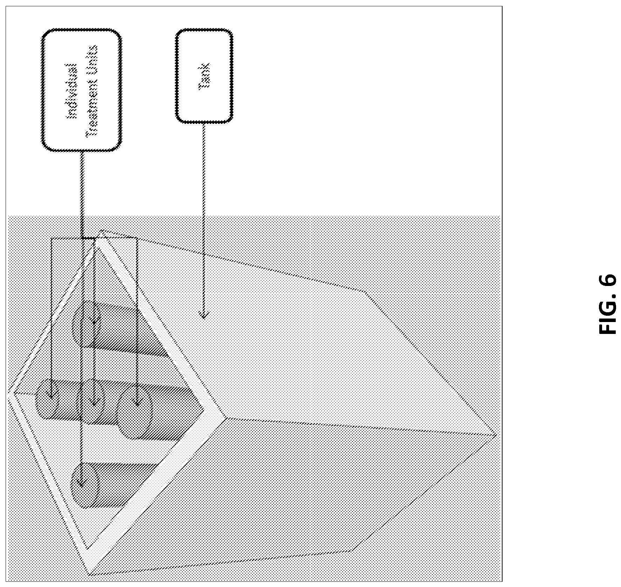

Example 1: In an example suited for use in the removal of nitrates, the system includes a tank connected to a source of water to be treated. Multiple smaller treatment units will be disposed within the tank, as shown in FIG. 6. Each smaller unit is a substantially watertight cylinder in which the wall is comprised of an ion-exchange membrane based barrier. Alternatively, the system may include one or more BESs, i.e., including a cathode electrode on the exterior and an anode electrode on the interior and which includes a means for applying voltage to the electrodes. The electrodes will be disposed such that there is no space or substantially no space between the electrode and the barrier. Similarly, support structures constructed with packing material will be disposed against the anode electrode to be used as a substrate for the formation of a biofilm. Support structures may be disposed against the cathode, but may be excluded in order to minimize the growth of microorganisms on the cathode side. In essence, the tank will function as a single large cathode chamber as a medium zone, while each smaller treatment unit will be an anode chamber as treatment zones. See FIGS. 4 and 5. Alternatively, cathodes can be included on the interior of the treatment units and anodes on the exterior, in which case the tank would constitute a cathode chamber while the treatment units would constitute anode chambers.

A medium consisting of wastewater with a high nitrate concentration will be introduced into the medium zone (i.e., the cathode chamber), while sources of chemical oxygen demand (COD) will be introduced into the treatment zone (i.e., anode chamber). The medium can enter into the unit through either an upflow or sideflow configuration. The ion exchange membrane barrier will allow nitrates to pass into the enclosure, but which prevents the microorganisms and COD in the treatment zone from leaving the enclosure and contaminating the main water source. Pressure differences between the treatment units and the tank may be utilized to prevent fluid from leaving the treatment zone in the event of a rupture in the barrier. This pressure difference can be created by the use of a pump or other mechanism. Alternatively it can be accomplished by varying the water level in the treatment zone relative to the medium zone. Generally the pressure will be such that fluid from the anode chamber is unable to enter the cathode chamber.

In this example it is contemplated that each treatment unit will be able to function independently, such that they can be replaced individually. The tank in which the treatment units will be located is also designed to function on its own or in parallel with other similar systems. This will allow modular use of the systems, so that increased treatment needs can be met by simply adding more systems.

Example 2: In a second example, the system is configured in a manner identical to the first example, except that there are no electrodes. The support structures will be disposed against the barrier directly.

Example 3: In a third example, the system consists of a substantially planar barrier or barriers (e.g., anion exchange membrane or cation exchange membrane) with planar support structures for biofilm growth (such as a plastic mesh) disposed parallel to the barrier or barriers. Preferably the support structures will be in contact with the barriers. One such enclosure will have one barrier and one support structure. Another enclosure will have two barriers on either side delineating the boundary of the enclosure with support structures on or near each barrier. These enclosures can be arranged in sequence, such that there will be multiple chambers, with each chamber sharing a barrier with the chamber adjacent to it. The first chamber will function as a treatment zone and be bounded on one side with a wall and on the other with a barrier & support structure. The second chamber will function as a medium zone and be bounded on one side with the barrier shared with the first chamber and a second support structure. The second chamber/medium zone will be bounded on the opposite side by a third support structure and a second barrier. The third chamber will have a fourth support structure near the second barrier. Nitrogenous waste (or other targeted compound) will flow into the second chamber and diffuse into the first and third chambers, where it will be treated by the microorganisms. Waste with high COD (or other secondary pollutant) will enter the first and third chambers to be utilized by the organism. This pattern can be repeated multiple times, such that there can be any number of enclosures. This system is also suitable for aquaculture water treatment.

Example 4: In a fourth example, the system is configured identically to the third embodiment, with the exception it will incorporate electrodes either used as the planar support structure or between the support structure and the barrier. The medium zone electrodes will function as cathodes and the treatment zone electrodes will function as anodes.

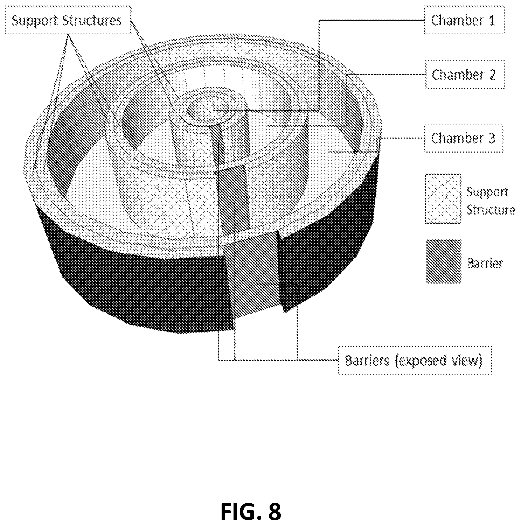

Example 5: In a fifth example, the system follows a similar pattern to the third embodiment, except that the chambers will be concentric cylinders rather than parallel planar shapes, as shown in FIG. 8. The wall of the first cylinder will be comprised of a barrier disposed between support structures (such as a plastic mesh) on the inside. The first cylinder will be disposed within a second cylinder, the wall of which will be comprised of a support structure in the internal facing side of a barrier. The second cylinder will be disposed within a third cylinder, the wall of which will be comprised of a support structure in the internal facing side of a barrier. Nitrogenous waste (or other targeted compound) will flow into the second chamber and diffuse into the first and third chambers, where it will be treated by the microorganisms. Waste with high COD (or other secondary pollutant) will enter the first and third chambers to be utilized by the organisms. This system is also suitable for aquaculture water treatment.

Example 6: This example, consists of microorganisms disposed within a substantially cubic enclosure connected to a medium tank such that the barrier is disposed between the enclosure and the medium. The barrier can be an ion exchange membrane or a filter which will allow the passage of the targeted compound but prohibit the passage of the microorganisms. A second stream is introduced to the enclosure. Preferably the microorganisms will utilize nitrate and/or nitrite, thereby providing nitrification and/or denitrification. The second stream will preferably be waste with a high COD.

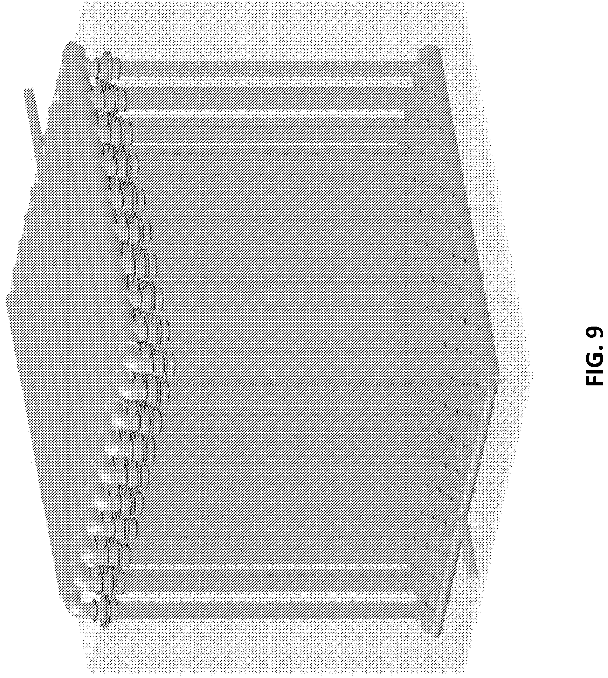

Example 8: commercial applications, it will be important to maximize the surface area of the semi-permeable barrier while also providing a container suitable for the long-term health of the microorganisms. Such conditions will be achieved with a design similar to FIG. 9, wherein a plurality of tubes, comprising semi-permeable barriers are interconnected to provide a flow path for the microorganisms within. As shown in FIG. 10, the medium to be decontaminated is simply held in the tank surrounding the plurality of interconnected semi-permeable barriers. In another example, the plurality of interconnected semi-permeable barriers could be biased at an electrical potential higher than the tank and the treatment zone could include exo-electrogens. Alternatively, the treatment zone could be the holding tank and the interconnected semi-permeable barriers provide a path for the medium to be decontaminated. Scope of the invention is thus indicated by the appended claims rather than by the foregoing description.

## Claims

1. A method for the removal of a first targeted contaminant in a first fluid medium and a second targeted contaminant in a second fluid medium in a system, comprising:
separating a treatment zone and a medium zone by a semi-permeable barrier;
providing the medium zone with the first fluid medium and the treatment zone with the second fluid medium; and
disposing a culture of microorganisms within the treatment zone, the culture comprising at least one first microorganism capable of using a first targeted contaminant in a first metabolic process and at least one second microorganism capable of using a second targeted contaminant in a second metabolic process,
wherein the semi-permeable barrier is impermeable to the second targeted contaminant, is permeable to the first targeted contaminant but is impermeable to the first and second microorganisms or impairs the passage of the first and second microorganisms.

2. The method of claim 1, wherein the at least one first microorganism capable of using the first targeted contaminant and the at least one second microorganism capable of using the second targeted contaminant are the same microorganism.

3. The method of claim 1 further comprising providing a support structure, disposed in the treatment zone to facilitate growth of the culture of microorganisms.

4. The method of claim 3, wherein the support structure comprises an electrode.

5. The method of claim 4, wherein electrical activity of the electrode is used to monitor the concentrations of the first targeted contaminant or the second targeted contaminant.

6. The method of claim 5, further comprising adjusting the concentration of the first targeted contaminant or the second targeted contaminant in response to a change in the monitored electrical activity.

7. The method of claim 4, wherein the at least first microorganism capable of using the first targeted contaminant or the at least second microorganism capable of using the second targeted contaminant is an exoelectrogenic microorganism; or
wherein the electrical potential of the treatment zone is higher than the electrical potential of the medium zone; or
wherein the electrical potential of the treatment zone is lower than the electrical potential of the medium zone.

8. The method of claim 1, wherein the semi-permeable barrier comprises an ion-exchange membrane; or
wherein the semi-permeable barrier comprises a filter.

9. The method of any of claims 1-8, wherein the first targeted contaminant comprises nitrates, nitrites, or ammonia; or
wherein the second targeted contaminant contains carbon.

10. The method of claim 9, wherein the semi-permeable barrier is impermeable to the fluid medium.

11. The method of claim 1 further comprising providing a plurality of treatment zones separated from the medium zone by a plurality of semi-permeable barriers; or
further comprising providing another treatment zone, separated from the medium zone by an additional semi-permeable barrier, and comprising a culture of microorganisms comprising the at least one first microorganism capable of using a first targeted contaminant in a metabolic process and the at least one second microorganism capable of using a second targeted contaminant in a metabolic process; or
further comprising providing a tank defining the medium zone.

12. The method of claim 1, wherein the first fluid medium has a chemical oxygen demand, and the second fluid medium has a nitrate concentration.

13. The method of claim 12, wherein the first fluid medium is animal waste or municipal sewage; or
wherein the second fluid medium is agricultural run-off water or aquaculture process water.

14. The method of any of claims 1-13, wherein the first and second fluid media comprise water.

15. The method of any of claims 1-14, wherein the first and second microorganisms are each independently selected from the group consisting of *Geobacter, Clostridia, Rhodeferax* and *E*. *coli.*

## Patentansprüche

1. Verfahren zum Entfernen einer ersten gezielten Verunreinigung in einem ersten Fluidmedium und einer zweiten gezielten Verunreinigung in einem zweiten Fluidmedium in einem System, umfassend: Trennen einer Behandlungszone und einer Mediumzone durch eine halbdurchlässige Barriere; Bereitstellen der Mediumzone mit dem ersten Fluidmedium und der Behandlungszone mit dem zweiten Fluidmedium; und Anordnen einer Kultur von Mikroorganismen in der Behandlungszone, wobei die Kultur mindestens einen ersten Mikroorganismus, der in der Lage ist, eine erste gezielte Verunreinigung in einem ersten metabolischen Prozess zu verwenden, und mindestens einen zweiten Mikroorganismus, der in der Lage ist, eine zweite gezielte Verunreinigung in einem zweiten metabolischen Prozess zu verwenden, umfasst,
wobei die halbdurchlässige Barriere gegenüber der zweiten gezielten Verunreinigung undurchlässig ist, gegenüber der ersten gezielten Verunreinigung durchlässig ist, aber gegenüber dem ersten und zweiten Mikroorganismus undurchlässig ist oder das Durchlaufen des ersten und zweiten Mikroorganismus behindert.

2. Verfahren nach Anspruch 1, wobei der mindestens erste Mikroorganismus, der in der Lage ist, die erste gezielte Verunreinigung zu verwenden, und der mindestens zweite Mikroorganismus, der in der Lage ist, die zweite gezielte Verunreinigung zu verwenden, derselbe Mikroorganismus sind.

3. Verfahren nach Anspruch 1, ferner umfassend das Bereitstellen einer Trägerstruktur, die in der Behandlungszone bereitgestellt ist, um das Wachstum der Kultur von Mikroorganismen zu erleichtern.

4. Verfahren nach Anspruch 3, wobei die Trägerstruktur eine Elektrode umfasst.

5. Verfahren nach Anspruch 4, wobei die elektrische Aktivität der Elektrode verwendet wird, um die Konzentrationen der ersten gezielten Verunreinigung oder der zweiten gezielten Verunreinigung zu überwachen.

6. Verfahren nach Anspruch 5, ferner umfassend das Einstellen der Konzentration der ersten gezielten Verunreinigung oder der zweiten gezielten Verunreinigung in Reaktion auf eine Änderung der überwachten elektrischen Aktivität.

7. Verfahren nach Anspruch 4, wobei der mindestens erste Mikroorganismus, der in der Lage ist, die erste gezielte Verunreinigung zu verwenden, oder der mindestens zweite Mikroorganismus, der in der Lage ist, die zweite gezielte Verunreinigung zu verwenden, ein exoelektrogener Mikroorganismus ist; oder wobei das elektrische Potential der Behandlungszone höher als das elektrische Potential der Mediumzone ist; oder wobei das elektrische Potential der Behandlungszone niedriger als das elektrische Potential der Mediumzone ist.

8. Verfahren nach Anspruch 1, wobei die halbdurchlässige Barriere eine Ionenaustauschmembran umfasst; oder
wobei die halbdurchlässige Barriere einen Filter umfasst.

9. Verfahren nach einem der Ansprüche 1-8, wobei die erste gezielte Verunreinigung Nitrate, Nitrite oder Ammoniak umfasst; oder
wobei die zweite gezielte Verunreinigung Kohlenstoff enthält.

10. Verfahren nach Anspruch 9, wobei die halbdurchlässige Barriere undurchlässig gegenüber dem ersten Fluidmedium ist.

11. Verfahren nach Anspruch 1, ferner umfassend Bereitstellen einer Vielzahl von Behandlungszonen, die durch eine Vielzahl halbdurchlässiger Barrieren von der Mediumzone getrennt sind; oder ferner umfassend Bereitstellen einer weiteren Behandlungszone, die durch eine zusätzliche halbdurchlässige Barriere von der Mediumzone getrennt ist, und umfassend eine Kultur von Mikroorganismen, die den mindestens ersten Mikroorganismus, der in der Lage ist, eine erste gezielte Verunreinigung in einem metabolischen Prozess zu verwenden, und den mindestens zweiten Mikroorganismus, der in der Lage ist, eine zweite gezielte Verunreinigung in einem metabolischen Prozess zu verwenden, umfasst; oder ferner umfassend Bereitstellen eines Behälters, der die Mediumzone definiert.

12. Verfahren nach Anspruch 1, wobei das erste Fluidmedium einen chemischen Sauerstoffbedarf und das zweite Fluidmedium eine Nitratkonzentration aufweist.

13. Verfahren nach Anspruch 12, wobei das erste Fluidmedium tierische Abfälle oder kommunales Abwasser ist; oder
wobei das zweite Fluidmedium landwirtschaftliches Ablaufwasser oder Aquakulturprozesswasser ist.

14. Verfahren nach einem der Ansprüche 1-13, wobei das erste und zweite Fluidmedium Wasser umfasst.

15. Verfahren nach einem der Ansprüche 1-14, wobei der erste und zweite Mikroorganismus jeweils unabhängig aus der Gruppe bestehend aus *Geobacter, Clostridia, Rhodeferax* und *E*. *coli* ausgewählt sind.

## Revendications

1. Procédé permettant l'élimination d'un premier contaminant ciblé dans un premier milieu fluide et d'un second contaminant ciblé dans un second milieu fluide dans un système, comprenant :
la séparation d'une zone de traitement et d'une zone de milieu par une barrière semi-perméable ;
la fourniture de la zone de milieu avec le premier milieu fluide et de la zone de traitement avec le second milieu fluide ; et
la disposition d'une culture de microorganismes au sein de la zone de traitement, la culture comprenant au moins un premier microorganisme pouvant utiliser un premier contaminant ciblé dans un premier processus métabolique et au moins un second microorganisme pouvant utiliser un second contaminant ciblé dans un second processus métabolique,
ladite barrière semi-perméable étant imperméable au second contaminant ciblé, étant perméable au premier contaminant ciblé mais étant imperméable au premier et au second microorganisme ou empêchant le passage des premier et second microorganismes.

2. Procédé selon la revendication 1, ledit au moins un premier microorganisme pouvant utiliser le premier contaminant ciblé et ledit au moins un second microorganisme pouvant utiliser le second contaminant ciblé étant le même microorganisme.

3. Procédé selon la revendication 1 comprenant en outre la fourniture d'une structure support, disposée dans la zone de traitement pour faciliter la croissance de la culture de microorganismes.

4. Procédé selon la revendication 3, ladite structure support comprenant une électrode.

5. Procédé selon la revendication 4, ladite activité électrique de l'électrode étant utilisée pour surveiller les concentrations du premier contaminant ciblé ou du second contaminant ciblé.

6. Procédé selon la revendication 5 comprenant en outre l'ajustement de la concentration du premier contaminant ciblé ou du second contaminant ciblé en réponse à une modification de l'activité électrique surveillée.

7. Procédé selon la revendication 4, ledit au moins premier microorganisme pouvant utiliser le premier contaminant ciblé ou ledit au moins second microorganisme pouvant utiliser le second contaminant ciblé étant un microorganisme exo-électrogène ; ou
ledit potentiel électrique de la zone de traitement étant supérieur au potentiel électrique de la zone de milieu ; ou
ledit potentiel électrique de la zone de traitement étant inférieur au potentiel électrique de la zone de milieu.

8. Procédé selon la revendication 1, ladite barrière semi-perméable comprenant une membrane échangeuse d'ions ; ou
ladite barrière semi-perméable comprenant un filtre.

9. Procédé selon l'une quelconque des revendications 1 à 8, ledit premier contaminant ciblé comprenant des nitrates, des nitrites ou de l'ammoniaque ; ou
ledit second contaminant ciblé contenant du carbone.

10. Procédé selon la revendication 9, ladite barrière semi-perméable étant imperméable au milieu fluide.

11. Procédé selon la revendication 1 comprenant en outre la fourniture d'une pluralité de zones de traitement séparées de la zone de milieu par une pluralité de barrières semi-perméables ; ou
comprenant en outre la fourniture d'une autre zone de traitement, séparée de la zone de milieu par une barrière semi-perméable supplémentaire, et comprenant une culture de microorganismes comprenant ledit au moins un premier microorganisme pouvant utiliser un premier contaminant ciblé dans un processus métabolique et ledit au moins un second microorganisme pouvant utiliser un second contaminant ciblé dans un processus métabolique ; ou
comprenant en outre la fourniture d'un réservoir définissant la zone de milieu.

12. Procédé selon la revendication 1, ledit premier milieu fluide présentant une demande chimique en oxygène, et le second milieu fluide présentant une concentration de nitrates.

13. Procédé selon la revendication 12, ledit premier milieu fluide étant un déchet animal ou des eaux usées municipales ; ou
ledit second milieu fluide étant une eau de ruissellement agricole ou une eau de procédé d'aquaculture.

14. Procédé selon l'une quelconque des revendications 1 à 13, lesdits premier et second milieux fluides comprenant de l'eau.

15. Procédé selon l'une quelconque des revendications 1 à 14, lesdits premier et second microorganismes étant chacun indépendamment choisis dans le groupe constitué par *Geobacter, Clostridia, Rhodeferax* et *E*. *coli.*
